# EUROPEAN PATENT SPECIFICATION

(11) **EP 2 250 218 B1**
(45) Date of publication and mention of the grant of the patent: **05.04.2017**
(21) Application number: 08751484.0
(22) Date of filing: 25.02.2008
(51) Int. Cl.: C08K 5/548, C08L 21/00, B60C 1/00

(54) **TIRE AND CROSSLINKABLE ELASTOMERIC COMPOSITION**
REIFEN UND VERNETZBARE ELASTOMERE ZUSAMMENSETZUNG
PNEU ET COMPOSITION ÉLASTOMÈRE RÉTICULABLE

(43) Date of publication of application: 17.11.2010
(73) Proprietor: Pirelli Tyre S.p.A., 20126 Milano (IT); Politecnico di Milano, 20133 Milano (IT)
(72) Inventor: GALIMBERTI, Maurizio, I-20126 Milano (IT); LAMPIGNANO, Giuditta, I-70028 Sannicandro di Bari (BA) (IT)
(74) Representative: Longoni, Alessandra
(86) International application number: PCT/IT2008/000128
(87) International publication number: WO 2009/107151

(56) References cited:
- EP-A- 0 972 799
- EP-A- 1 367 092
- EP-A- 1 788 020
- WO-A-2006/013056
- WO-A-2007/098784
- WO-A1-2008/145155
- DE-A1- 10 208 590

## Description

### Field of the invention

The present invention relates to a tire including at least one structural element obtained by crosslinking a crosslinkable elastomeric composition comprising at least one elastomeric polymer, at least one silica reinforcing filler and at least one coupling agent containing at least one mercapto group, said crosslinkable elastomeric composition being substantially free of heavy metals or derivatives thereof, in particular of zinc or derivatives thereof.

The at least one structural element of the tire is preferably a tire tread band.

### Background of the invention

Processes for vulcanizing diene elastomeric polymers with sulfur are widely used in the rubber industry for the production of a wide range of manufactured products, and in particular of tires. Although these processes lead to the production of high-quality vulcanized products, they involve considerable complexity mainly linked to the fact that, in order to obtain an optimum vulcanization in industrially acceptable times, it is necessary to use a complex vulcanizing system which includes, in addition to sulfur, one or more vulcanization activators such as, for example, heavy metals or derivatives thereof, such as, for example, zinc derivatives, and in particular ZnO, ZnCO₃, ZnCO₃.2Zn(OH)₂.H₂O, ZnCl₂, zinc salts of fatty acids such as, for example, zinc stearate, and one or more vulcanization accelerators such as, for example, thiazoles, dithiocarbamates, thiurams, guanidine, sulphenamides. The presence of these products may, in some cases, entail considerable problems as regards the harmfulness/toxicity both when being produced and when in use.

Zinc or derivatives thereof, in particular zinc oxide, usually in combination with fatty acids such as, for example, stearic acid, are usually used in the production of crosslinkable elastomeric compositions which may be used in the manufacturing of tires. Release of zinc or derivatives thereof into the environment from the manufactured products obtained from said elastomeric compositions occurs during production, as well as during disposal and recycling of said manufactured products, for instance, through leaching in land-fill sites. Moreover, due to the abrasion to which tires are usually subjected, fine particles of crosslinked elastomeric compositions, in particular of the crosslinked elastomeric compositions included in tire tread bands, are dispersed in the environment so causing seriuos pollution problems. It is in fact known that zinc has a harmful effect on microorganisms.

In this respect, a number of attempts have been made directed towards reducing or eliminating the amount of said heavy metals or derivatives thereof, in particular of zinc or derivatives thereof, from crosslinkable elastomeric compositions.

For example, International Patent Application WO 00/37267 relates to a crosslinkable elastomeric composition that is particularly useful for producing tire tread bands, comprising: (a) a polymer base containing a crosslinkable unsaturated chain; (b) a vulcanizing system including: (b1) an amount of between 0.5 phr and 2 phr of sulfur, (b2) an amount of between 1.5 phr and 7 phr of at least one vulcanization accelerator containing at least one carbon atom linked to at least two sulfur atoms, (b3) an amount of not greater than 2 phr, expressed in terms of zinc oxide equivalents, of at least one activator. Said activator is preferably selected from the group comprising: the oxygenated compounds of a metal selected from Zn, Bi, Pb, the salts formed between said metal and a fatty acid, either saturated or unsaturated, having from 8 to 18 carbon atoms, and mixtures thereof.
United States Patent US 3,856,729 relates to a crosslinkable elastomeric composition comprising a butadiene rubber, sulfur and an activator, characterized in that the sulfur and the activator are present in an amount of between 0.1 phr and 0.8 phr, preferably between 0.1 phr and 0.6 phr, and between 0.1 phr and 1.0 phr, preferably between 0.1 phr and 0.5 phr, respectively. Preferably, said activator is at least one metal compound selected from the group consisting of zinc oxide, zinc compound selected from the group consisting of zinc carbonate, lithopone, fatty acid salts of zinc, dithioacid salts of zinc and thiazole salts of zinc, lead monoxide and cadmium oxide.

United States Patent US 3,451,458 relates to a sulfur-crosslinkable elastomeric composition that is particularly useful for preparing tire tread bands, comprising a synthetic diene rubber and silica, said composition being substantially free of activators based on metal oxides, and in particular zinc oxide.

International Patent Application WO 2004/052981 relates to a method for vulcanizing a rubber compound, wherein the rubber compound, under heating, in the presence of sulfur or a sulfur-containing compound, and a vulcanization accelerator, is contacted with an activator comprising a support material loaded with Ba, Pd, Cd, Ca, Mg and/or Zn ions, preferably Zn ions, provided on the support through an ion exchange process with a metal ion-containing solution. Preferably, the support material is said to be a clay such as, for example, halloysite, illite, kaolinite, bentonite, phyllosilicate and/or palygorskite-like clays.

International Patent Application WO 2007/098784 relates to a tire, comprising at least one structural element including a crosslinked elastomeric material obtained by crosslinking a crosslinkable elastomeric composition comprising: (a) at least one diene elastomeric polymer; (b) at least one activator obtained by dry comilling a mixture comprising: at least one salt, or one oxide, or one hydroxide of a metal belonging to groups 2, 3, 4, 5, 6, 7, 8, 9, 10, 11, 12, 13, 14, 15, or 16 of the Periodic Table of the Elements; and at least one layered material, said layered material having an individual layer thickness of from 0.01 nm to 30 nm, preferably of from 0.05 nm to 15 nm, more preferably of from 0.1 nm to 2 nm; (c) at least one vulcanization accelerator; (d) sulfur or derivatives thereof. Preferably, said crosslinkable elastomeric composition is substantially free of heavy metal compounds, in particular of zinc compounds.

International Patent Application WO 2006/013056 relates to a composition free or practically free of zinc or zinc derivatives, comprising at least: one diene elastomer; one inorganic filler as reinforcing filler; optionally carbon black at a rate less than 5 parts by weight per 100 parts of elastomer; a silane polysulfide of formula (I): 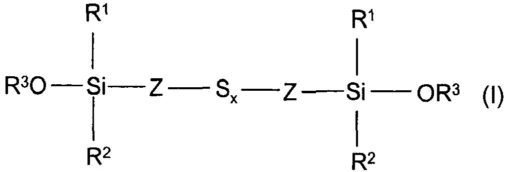 wherein the symbols R¹ and R², identical or different, represent each a monovalent hydrocarbon group selected among alkyls, linear or branched, having 1 to 6 carbon atoms and the phenyl radical; the symbols R³, identical or different, represent each hydrogen or a monovalent hydrocarbon group selected among alkyls, linear or branched, having 1 to 4 carbon atoms and alkoxyalkyls, linear or branched, having 2 to 8 carbon atoms; the symbols Z, identical or different, are divalent binding groups comprising 1 to 18 carbon atoms; x is an integer or fraction not less than 2.

EP1367092 describes rubber compositions for tire treads that are free of zinc or derivatives thereof and comprise Si-69 (Bis[3-(triethoxysilyl)propyl]tetrasulfide) as coupling agent. The description mentions some coupling agents that comprise a mercapto group as possible alternatives to Si-69, but does not describe any advantage derived from their possible use.

### Summary of the invention

The Applicant has noticed that the crosslinked elastomeric compositions wherein the amount of heavy metals or derivatives thereof, in particular of zinc or derivatives thereof, has been reduced or even eliminated, as well as the tires so obtained, may show some drawbacks.

In particular, the Applicant has noticed that the crosslinked elastomeric compositions wherein the amount of heavy metals or derivatives thereof, in particular of zinc or derivatives thereof, has been reduced or even eliminated, as well as the tires so obtained, may show the following drawbacks:
- an increased variation of the dynamic elastic modulus (E') as the temperature increases (namely, an increased "thermoplastic behaviour") of the crosslinked elastomeric compositions which may negatively affect the performances of the obtained tires;
- an increase in the Tan delta (loss factor) values at high temperature (in particular, at 70°C) and, consequently, an increased rolling resistance of the obtained tires;
- a decrease in the Tan delta (loss factor) values at low temperature (in particular, at 10°C) and, consequently, a negative effect on the wet grip of the obtained tires;
- a worsening of the Payne effect (ΔG') (i.e. a worsening of reinforcing filler dispersion) which may negatively affect the performances of the obtained tires.
Therefore, the Applicant has faced the problem of providing a tire (e.g., a high-performance tire) showing a good balance between wet grip, rolling resistance and abrasion resistance by using crosslinkable elastomeric compositions substantially free of heavy metals or derivatives thereof, in particular of zinc or derivatives thereof.

The Applicant has now found that it is possible to obtain a tire having the abovementioned properties, by adding at least one coupling agent containing at least one mercapto group to crosslinkable elastomeric compositions comprising at least one elastomeric polymer, at least one silica reinforcing filler, said crosslinkable elastomeric compositions being substantially free of heavy metals or derivatives thereof, in particular of zinc or derivatives thereof.

Moreover, the Applicant has also found that the amount of silane coupling agents, in particular the amount of those containing a sequence of sulfur atoms, other than said coupling agent containing at least one mercapto group, which is usually used in crosslinkable elastomeric compositions comprising silica reinforcing fillers, may be reduced.

The reduced amount of said silane coupling agents allows to avoid the limitation on the maximum temperature which may be reached during the mixing and thermomechanical processing operations of the crosslinkable elastomeric compositions comprising the same, which is usually necessary in order to avoid the penalty of an irreversible thermal degradation of the silane coupling agents.

According to a first aspect, the present invention relates to a tire comprising at least one structural element including a crosslinked elastomeric material obtained by crosslinking a crosslinkable elastomeric composition comprising:
(a) 100 phr of at least one elastomeric polymer;
(b) from 5 phr to 120 phr, preferably from 20 phr to 100 phr, more preferably from 30 phr to 90 phr, of at least one silica reinforcing filler;
(c) from 0.1 phr to 10 phr, preferably from 0.2 phr to 8 phr, more preferably from 0.3 phr to 6 phr, of at least one coupling agent containing at least one mercapto group selected from a compound of formula (I) or a mercaptosilane of formula (II) as defined below;
(d) from 0.5 phr to 10 phr of at least one silane coupling agent, other than said at least one coupling agent containing at least one mercapto group (c), having formula (IV) as defined below;
said crosslinkable elastomeric composition comprising an amount lower than 0.5 phr of heavy metals or derivatives thereof, in particular of zinc or derivatives thereof.

According to one preferred embodiment, said tire comprises:
- a carcass structure of a substantially toroidal shape, having opposite lateral edges associated with respective right-hand and left-hand bead structures;
- a belt structure applied in a radially external position with respect to said carcass structure;
- a tread band applied in a radially external position with respect to said belt structure;
- a pair of sidewalls applied laterally on opposite sides with respect to said carcass structure;
wherein said structural element is said tread band.

Preferably, said bead structures comprise at least one bead core and at least one bead filler.

For the purposes of the present description, the expression "substantially free of heavy metals or derivatives thereof' means that said crosslinkable elastomeric composition comprises an amount of heavy metals or derivatives thereof such that the amount of heavy metals present in said crosslinkable elastomeric composition is lower than 0.5 phr, preferably of from 0 phr to 0.2 phr. In particular, said crosslinkable elastomeric composition is substantially free of heavy metals or derivatives thereof which are usually used as vulcanization activators in sulfur-crosslinkable elastomeric compositions such as, for example: zinc compounds, in particular, ZnO, ZnCO₃ ZnCO₃.2Zn(OH)₂.H₂O, ZnCl₂, zinc salts of saturated or unsaturated fatty acids containing from 8 to 18 carbon atoms, such as, for example, zinc stearate, zinc octanoate, said zinc salts being optionally formed in situ in the elastomeric composition from ZnO and fatty acids. In addition, said crosslinkable elastomeric composition is substantially free of other toxic and/or harmful heavy metal compounds such as, for example, Bi₂O₃, CdO, HgO, PbO, Pb₃O₄, PbO₂, or mixtures thereof.

For the purposes of the present description and of the claims which follow, the term "phr" means the parts by weight of a given component of the crosslinkable elastomeric composition per 100 parts by weight of the elastomeric polymer(s).

The present invention, may show one or more of the preferred characteristics hereinafter described.

According to a further preferred embodiment, said crosslinkable elastomeric composition may further comprise (e) at least one sulfur or derivatives thereof.
According to a further preferred embodiment, said crosslinkable elastomeric composition may further comprise (f) at least one vulcanization accelerator.

According to a further preferred embodiment, said crosslinkable elastomeric composition may further comprise (g) at least one layered material having an individual layer thickness of from 0.01 nm to 30 nm, preferably of from 0.2 nm to 15 nm, more preferably of from 0.5 nm to 2 nm. The addition of said at least one layered material (g) may allow to obtain a crosslinkable elastomeric composition having a relatively low viscosity (Mooney viscosity) which, consequently, may be more easily processed in conventional rubber processing apparatus, including internal rubber mixers and various rubber extruders.

According to a further preferred embodiment, said crosslinkable elastomeric composition may further comprise (h) at least one liquid elastomeric polymer having a number average molecular weight (Mₙ) of from 1000 to 20000, preferably of from 3000 to 15000 and, preferably, an amount of vinyl unsaturations in the butadiene part, of from 15% to 100%, preferably of from 30% to 90%. The addition of said at least one liquid elastomeric polymer (h) may allow to obtain a crosslinkable elastomeric composition having a relatively low viscosity (Mooney viscosity) which, consequently, may be more easily processed in conventional rubber processing apparatus, including internal rubber mixers and various rubber extruders. Said number average molecular weight (Mₙ) may be measured according to techniques known in the art such as, for example, by gel permeation chromatography (GPC). Said vinyl unsaturations may be measured according to techniques known in the art such as, for example, by ¹H-NMR spectroscopy or ¹³C-NMR spectroscopy. According to one preferred embodiment, said at least one elastomeric polymer (a) may be selected, for example, from (a₁) diene elastomeric polymers which are commonly used in sulfur-crosslinkable elastomeric compositions, that are particularly suitable for producing tires, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene, or isoprene, are particularly preferred.
Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.
Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymers (a₁) may be selected, for example, from: cis-1,4-polyisoprene (natural or synthetic cis-1,4-polyisoprene, preferably natural cis-1,4-polyisoprene, i.e. natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof. Styrene/1,3-butadiene copolymers, styrene/isoprene/1,3-butadiene copolymers, styrene/1,3-butadiene/acrylonitrile copolymers, or mixtures thereof, are particularly preferred.

Alternatively, said at least one elastomeric polymer (a) may be selected, for example, from (a₂) elastomeric polymers of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

Mixtures of the abovementioned diene elastomeric polymers (a₁) with the abovementioned elastomeric polymers (a₂), may also be used.

According to one preferred embodiment, said crosslinkable elastomeric composition may comprise at least 10% by weight, preferably from 20% by weight to 100% by weight, with respect to the total weight of the at least one elastomeric polymer (a), of styrene/1,3-butadiene copolymers, in particular of styrene/1,3-butadiene copolymers having a high amount of vinyl unsaturations (e.g., higher than or equal to 40% in the butadiene part).

According to a further preferred embodiment, said crosslinkable elastomeric composition may comprise at least 10% by weight, preferably from 20% by weight to 100% by weight, with respect to the total weight of the at least one elastomeric polymer (a), of polybutadiene polymers, in particular of polybutadiene polymers having a high amount of vinyl unsaturations (e.g., higher than or equal to 40%).

The above reported elastomeric polymers (a) may optionally be functionalized by reaction with suitable terminating agents or coupling agents. In particular, the diene elastomeric polymers (a₁) obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof. According to one preferred embodiment, said at least one silica reinforcing filler (b) may be selected, for example, from: pyrogenic silica, precipitated amorphous silica, wet silica (hydrated silicic acid), dry silica (anhydrous silicic acid), fumed silica, calcium silicate, or mixtures thereof. Other suitable fillers include aluminum silicate, magnesium silicate, or mixtures thereof. Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates. The BET surface area, as measured according to Standard ISO 5794-1:2005, gives the best measure of the reinforcing character of different silicas. Silica reinforcing fillers which may be advantageously used according to the present invention, preferably have a surface area of from 32 m²/g to 400 m²/g, more preferably of from 100 m²/g to 250 m²/g, still more preferably of from 150 m²/g to 220 m²/g. The pH of said silica reinforcing fillers is, generally, of from 5.5 to 7.0, preferably of from 5.5 to 6.8.

Examples of silica reinforcing fillers which may be used according to the present invention and are available commercially are the products known by the name of Hi-Sil^{®} 190, Hi-Sil^{®} 210, Hi-Sil^{®} 215, Hi-Sil^{®} 233, Hi-Sil^{®} 243, from PPG Industries (Pittsburgh, Pa.); or the products known by the name of Ultrasil^{®} VN2, Ultrasil^{®} VN3 from Evonik Degussa GmbH; or the product known under the name of Zeosil^{®} 1165MP from Rhodia.

According to one preferred embodiment, said at least one coupling agent containing at least one mercapto group (c), may be selected, from compounds having the following general formula (I): 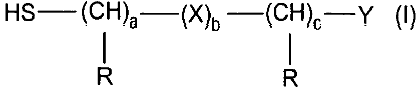 wherein:
- a + c is an integer of from 1 to 36, extremes included;
- R, which may be equal or different from each other, represents a hydrogen atom; a linear or branched C₁-C₆ alkyl group; a -COOH group; an alkylpolyether group having formula -CₚH₂ₚ₊₁(OCₘH₂ₘ)_{z} wherein p is an integer of from 2 to 20 extremes included, m is an integer of from 1 to 20 extremes included, and z is an integer of from 1 to 20 extremes included;
- X represents an oxygen atom; a sulfur atom; a -NH group;
- when X represents an oxygen atom or a -NH group, b is 0 or 1;
- when X represents a sulfur atom, b is 0, or an integer of from 1 to 4, extremes included;
- Y represents a polar group which is selected from: silane groups; acid groups; ester groups; amide groups; imide groups; nitro groups; hydroxy groups; mercapto groups; on condition that, when Y represents a mercapto group, at least one of the R substituents is a -COOH group.

According to a further preferred embodiment, said at least one coupling agent containing at least one mercapto group (c) may be selected from mercaptosilanes, mercaptans, or mixtures thereof. Mercaptosilanes are particularly preferred.

According to a further preferred embodiment, said mercaptosilanes may be selected, from compounds having the following general formula (II): 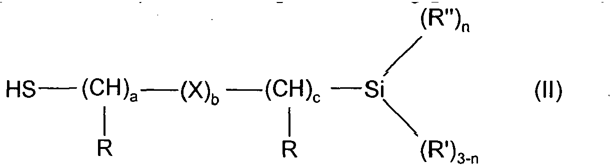 wherein:
- a, b, c, R and X, have the same meanings as above disclosed;
- R" represents a halogen atom such as, for example, chlorine, bromine, iodine, preferably chlorine; or a C₁-C₁₀ alkoxy group;
- R', which may be equal or different from each other, are selected from: C₁-C₃₆ alkyl groups; C₆-C₂₀ aryl groups; C₇-C₃₀ alkylaryl or arylalkyl groups; C₅-C₃₀ cycloaliphatic groups;
- n is an integer of from 1 to 3, extremes included.

Preferably, R" represents a C₁-C₃ alkoxy group; R represents a hydrogen atom, or an alkylpolyether group having formula -CₙH₂ₙ₊₁(OCₘH₂ₘ)_{z}; b is 0; a + c is 3; and n is 3.

Specific examples of mercaptosilanes having general formula (II) which may be advantageously used according to the present invention are: 1-mercapto-methyltriethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercaptooctadecyldiethoxychlorosilane, 3-(triethoxysilyl)propanthiol reaction product with ethoxylated C₁₃-alcohol (VP Si 363 silane from Evonik Degussa GmbH), or mixture thereof. 3-Mercaptopropyltriethoxysilane is particularly preferred.

According to a further preferred embodiment, said mercaptanes may be selected, from compounds having the following general formula (III): 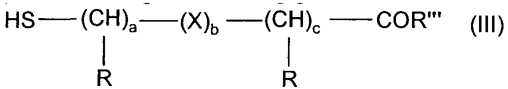 wherein:
- a, b, c, R and X, have the same meanings as above disclosed;
- R"' represents:
   - a -ORₐ group, wherein Rₐ represents a hydrogen atom; a metal such as, for example, lithium, sodium, potassium, magnesium, calcium; a linear or branched or cyclic C₁-C₃₆ alkyl group; a C₆-C₂₀ aryl group; a C₇-C₃₀ alkylaryl or arylalkyl group; a C₅-C₃₀ cycloaliphatic group; an ammonium ion;
   - a -NR₁R₂ group, wherein R₁ and R₂, represents a linear or branched or cyclic C₁-C₃₆ alkyl group; a C₆-C₂₀ aryl group; a C₇-C₃₀ alkylaryl or arylalkyl group; a C₅-C₃₀ cycloaliphatic group.

Preferably, R is a hydrogen atom; b is 0; a + c is an integer of from 3 to 12, extremes included; R'" represent a -ORₐ wherein Rₐ is a hydrogen atom.

Specific examples of mercaptans having general formula (III) which may be advantageously used according to the present invention are: thioglycolic acid, 2-mercaptopropionic acid (thiolactic acid), 3-mercaptopropionic acid, 4-mercaptobutyric acid, mercaptoundecanoic acid, mercaptooctadecanoic acid, 2-mercaptosuccinic acid, 3,4-dimercaptosuccinic acid, 3-(3-mercaptopropyl-sulfanyl)propionic acid, 3-(3-mercaptopropyloxy)propionic acid, alkali, alkaline earth or ammonium salts thereof, or mixtures thereof. Mercaptoundecanoic acid is preferred.

As disclosed above, said crosslinkable elastomeric composition further comprises
(d) at least one silane coupling agent other than said at least one coupling agent containing at least one mercapto group
(c) selected from those having the following general formula (IV):

   (R₅)₃Si-CₒH₂ₒ-R₆ (IV)

   wherein the groups R₅, which may be equal or different from each other, are selected from: alkyl, alkoxy or aryloxy groups or from halogen atoms, on condition that at least one of the groups R₅ is an alkoxy or aryloxy group; is an integer of from 1 to 6, extremes included; R₆ is a group selected from: nitroso, amino, epoxide, vinyl, imide, chloro, -(S)_{q}CₒH₂ₒ-Si-(R₅)₃, or -S-COR₅, wherein o and q are integers of from 1 to 6, extremes included and the groups R₅ are defined as above.

Among the silane coupling agents (d) that are particularly preferred are bis(3-triethoxysilylpropyl)tetrasulphide, bis(3-triethoxysilylpropyl)disulphide, monoethoxy-dimethylsilylpropyltetrasulphide, monoethoxy-dimethylsilylpropyldisulphide, or mixtures thereof. Said silane coupling agents (e) may be used as such or as a suitable mixture with an inert filler (for example, carbon black) so as to facilitate their incorporation into the elastomeric polymer(s).

According to one preferred embodiment, said at least one silane coupling agent (d) may be present in the crosslinkable elastomeric composition in an amount of from 0.5 phr to 6 phr.

As disclosed above, said crosslinkable elastomeric composition may further comprise at least one sulfur or a sulfur donor (e).

According to one preferred embodiment, (e) may be selected, for example, from:
- soluble sulfur (crystalline sulfur);
- insoluble sulfur (polymeric sulfur);
- sulfur dispersed in oil (for example, 33% sulfur known under the trade name Crystex^{®} OT33 from Flexsys);
- sulfur donors such as, for example, tetramethylthiuram disulphide (TMTD), tetrabenzylthiuram disulphide (TBzTD), tetraethylthiuram disulphide (TETD), tetrabutylthiuram disulphide (TBTD), dimethyldiphenylthiuram disulphide (MPTD), pentamethylenethiuram tetrasulphide or hexasulphide (DPTT), morpholinobenzothiazole disulphide (MBSS), N-oxydiethylenedithiocarbamyl-N'-oxydiethylenesulphenamide (OTOS), dithiodimorpholine (DTM or DTDM), caprolactam disulphide (CLD); or mixtures thereof;
or mixtures thereof.

According to one preferred embodiment, said sulfur or derivatives thereof (e) is present in the crosslinkable elastomeric composition in an amount of from 0.5 phr to 5 phr, preferably of from 1 phr to 3 phr.

As disclosed above, said crosslinkable elastomeric composition may further comprise at least one vulcanization accelerator (f).

According to one preferred embodiment, said at least one vulcanization accelerator (f) may be selected, for example, from:
- thiazoles such as, for example, 2-mercaptobenzothiazole (MBT), 2-mercapto-benzothiazole disulphide (MBTS), 2,4-dinitrophenylmercaptobenzothiazole, or mixtures thereof;
- sulphenamides such as, for example, N-cyclohexyl-2-benzo-thiazylsulphenamide (CBS), N-oxydiethylene-2-benzothiazylsulphenamide (OBS), N-t-butyl-2-benzothiazylsulphenamide (TBBS), N,N-dicyclohexyl-2-benzothiazylsulphenamide (DCBS), or mixtures thereof;
- guanidines such as, for example, diphenylguanidine (DPG), di-o-tolylguanidine (DOTG), o-tolylbiguanide (OTBG), or mixtures thereof;
- thiurams such as, for example, thiuram monosulphides [for example, tetramethylthiuram monosulphide (TMTM)], thiuram disulphides [for example, tetramethylthiuram disulphide (TMT or TMTD), tetraethylthiuram disulphide (TETD), tetrabutylthiuram disulphide (TBTD or TBTS), dimethyldiphenyl-thiuram disulphide (MPTD), diethyldiphenylthiuram disulphide (EPTD)], thiuram tetrasulphides (for example, pentamethylenethiuram tetrasulphide), thiuram hexasulphides (for example, pentamethylenethiuram hexasulphide), or mixtures thereof;
- Schiff's bases and other amino accelerators such as, for example, products of condensation between homologous acroleins with aromatic bases, butyraldehyde-aniline (BAA) condensation products, tricrotonylidenetetramine (TLT), cyclohexylethylamine (CEA), polyethylenepolyamine (PEP), hexamethylenetetramine (HEXA), or mixtures thereof;
or mixture thereof.

According to one preferred embodiment, said vulcanization accelerator (f) is present in the crosslinkable elastomeric composition in an amount of from 0.5 phr to 5 phr, preferably of from 1 phr to 3 phr.
As disclosed above, said crosslinkable elastomeric composition may further comprise (g) at least one layered material.
According to one preferred embodiment, said at least one layered material (g) may be selected, for example, from: phyllosilicates such as, for example, smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite is particularly preferred. These layered material generally contains exchangeable ions such as sodium (Na⁺), calcium (Ca²⁺), potassium (K⁺), magnesium (Mg²⁺), hydroxide (HO⁻), or carbonate (CO₃²⁻), present at the interlayer surfaces.
In order to render the layered material (g) more compatible with the elastomeric polymer(s) said at least one layered material (g) may be treated with at least one compatibilizing agent. Said compatibilizing agent is capable of undergoing ion exchange reactions with the ions present at the interlayers surfaces of the layered material.

According to one preferred embodiment, said at least one compatibilizing agent may be selected, for example, from the quaternary ammonium or phosphonium salts having the following general formula (V): 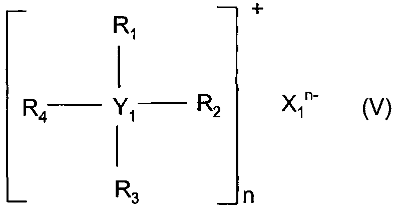 wherein:
- Y₁ represents N or P;
- R₁, R₂, R₃ and R₄, which may be equal or different from each other, represent a linear or branched C₁-C₂₀ alkyl or hydroxyalkyl group; a linear or branched C₁-C₂₀ alkenyl or hydroxyalkenyl group; a group -R₅-SH or -R₅-NH wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group possibly containing hetero atom such as oxygen, nitrogen or sulfur;
- X₁ⁿ⁻ represents an anion such as the chloride ion, the sulphate ion or the phosphate ion;
- n represents 1, 2 or 3.

Said layered material (g) may be treated with the compatibilizing agent before adding it to the elastomeric polymer(s). Alternatively, said layered material (g) and the compatibilizing agent may be separately added to the elastomeric polymer(s).

The treatment of the layered material (g) with the compatibilizing agent may be carried out according to known methods such as, for example, by an ion exchange reaction between the layered material and the compatibilizing agent: further details about said methods may be found, for example, in United States Patents US 4,136,103, US 5,747,560, or US 5,952,093.

According to one preferred embodiment, said at least one layered material (g) may be present in the crosslinkable elastomeric composition in an amount of from 0 phr to 20 phr, preferably of from 2 phr to 10 phr.

Examples of layered material (g) which may be used according to the present invention and are available commercially are the products known by the name of Dellite^{®} 67G, Dellite^{®} 72T, Dellite^{®} 43B, from Laviosa Chimica Mineraria S.p.A.; Cloisite^{®} 25A, Cloisite^{®} 10A, Cloisite^{®} 15A, Cloisite^{®} 20A, from Southern Clays; Nanofil^{®} 5, Nanofil^{®} 8, Nanofil^{®} 9, from Süd Chemie; Bentonite^{®} AG/3 from Dal Cin S.p.A.

As disclosed above, said crosslinkable elastomeric composition may further comprise (h) at least one liquid elastomeric polymer.

According to one preferred embodiment, said at least one liquid elastomeric polymer (h) may be selected, for example, from liquid elastomeric polymers having a Brookfield viscosity, measured at 45°C, not higher than 150000 cPs, preferably of from 10000 cPs to 100000 cPs.

According to a further preferred embodiment, said at least one liquid elastomeric polymer (h), may be selected, for example, from liquid elastomeric polymers having a glass transition temperature (T_{g}) of from -5°C to -120°C, preferably of from -10°C to -80°C.

Advantageously, said at least one liquid elastomeric polymer (h) may be pourable at a temperature of from 20°C to 25°C. Said polymer is preferably administered within such temperature, although it might be used at a temperature above or below such temperature range.

According to one preferred embodiment, said at least one liquid elastomeric polymer (h), may be selected, for example, from homopolymers or copolymers of conjugated diolefins containing from 4 to 12, preferably from 4 to 8, carbon atoms, such as, for example: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-Butadiene homopolymers, or 1,3-butadiene-isoprene copolymers, are particularly preferred.

According to a further preferred embodiment, said at least one liquid elastomeric polymer (h), may be selected, for example, from copolymers of 1,3-butadiene with at least one monovinylarene containing from 8 to 20, preferably from 8 to 12 carbon atoms, said monovinylarene being selected, for example from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene/1,3-butadiene copolymers are preferred, styrene/1,3-butadiene random copolymers are particularly preferred.

Alternatively, epoxydized poly(butadienes), maleic poly(butadienes), acrylated poly(butadienes), acrylonitrile/1,3-butadiene copolymers, may be advantageously used.
According to one preferred embodiment, said at least one liquid elastomeric polymer (h) may be present in the crosslinkable elastomeric composition in an amount of from 0 phr to 35 phr, preferably from 2 phr to 20 phr.
Examples of liquid elastomeric polymers (h) which may be used according to the present invention and are available commercially are the following products: poly(butadienes) (Ricon^{®} 130, 131, 134, 142, 150, 152, 153, 154, 156, 157, P30D) available from Sartomer Company, Inc; styrene/1,3-butadiene random copolymers (Ricon^{®} 100, 181, 184) available from Sartomer Company Inc.; maleinized poly(butadienes) (Ricon^{®} 130MA8, 130MA13, 130MA20, 131MA5, 131MA10, 131MA17, 131MA20, 156MA17) available from Sartomer Company, Inc.; acrylated poly(butadienes) (CN302, NTX6513, CN301, NTX6039, PRO6270, Ricacryl^{®} 3100, Ricacryl^{®} 3500) available from Sartomer Inc.; epoxydized poly(butadienes) (Polybd^{®} 600, 605) available from Sartomer Company. Inc., or Epolead^{®} PB3600 available from Daicel Chemical Industries, Ltd; acrylonitrile/1,3-butadiene copolymers (Hycar^{®} CTBN series, ATBN series, VTBN series and ETBN series) available from Hanse Chemical.

At least one additional reinforcing filler may be advantageously added to the above reported crosslinkable elastomeric composition, in an amount generally of from 0 phr to 50 phr, preferably of from 4 phr to 30 phr. The reinforcing filler may be selected from those commonly used for crosslinked manufactured articles, in particular for tires, such as, for example, carbon black, calcium carbonate, kaolin, or mixtures thereof.

The types of carbon black which may be used according to the present invention may be selected from those conventionally used in tires manufacturing, and generally have a surface area of not less than 20 m²/g (determined by CTAB absorption as described in Standard ISO 6810:1995).

The crosslinkable elastomeric composition above reported may be vulcanized according to known techniques. To this end, in the crosslinkable elastomeric composition, after one or more steps of thermomechanical processing, sulfur-based vulcanizing agent(s), i.e. sulfur or derivatives thereof (e) is/are incorporated together with vulcanization accelerator(s) (f). In the final processing step, the temperature is generally kept below 140°C, so as to avoid any undesired pre-crosslinking phenomena.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, anti-ozone agents, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges from 0 phr to 50 phr, preferably from of 5 phr to 30 phr.

The above reported crosslinkable elastomeric composition may be prepared by mixing together the elastomeric polymer(s), the coupling agent(s) containg at least one mercapto group, with the silica reinforcing filler and the other compounds optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw or multi-screw type.

### Brief description of the drawing

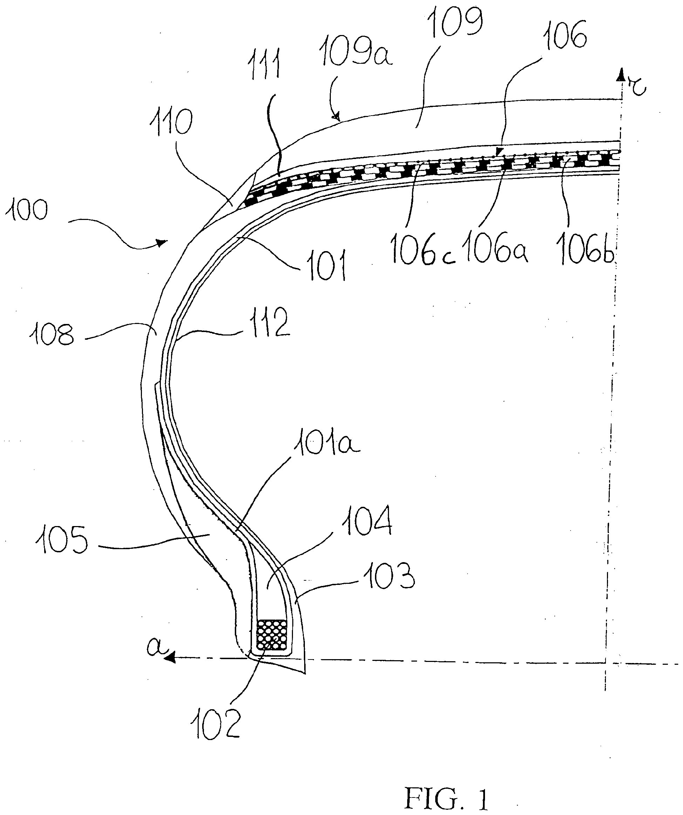

The present invention will now be illustrated in further detail by means of an illustrative embodiment, with reference to the attached Fig. 1 which is a view in cross-section of a portion of a tire made according to the present invention.

### Detailed description of the preferred embodiment

With reference to Fig. 1, "a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures (103) comprising at least one bead core (102) and at least one bead filler (104). The association between the carcass ply (101) and the bead core (102) is achieved here by turning-back the opposite lateral edges of the carcass ply (101) around the bead core (102) so as to form the so-called carcass turn-up (101a) as shown in Fig. 1.

Alternatively, the conventional bead core (102) may be replaced with at least one annular insert formed from rubberized wires arranged, in concentric coils (not represented in Fig. 1) (see, for example, European Patent Applications EP 928,680 or EP 928,702). In this case, the carcass ply (101) is not turned-back around said annular inserts, the coupling being provided by a second carcass ply (not represented in Fig. 1) applied externally over the first.

The carcass ply (101) usually comprises a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys).

The carcass ply (101) is usually of radial type, i.e. it incorporates reinforcing cords arranged in a substantially perpendicular direction relative to a circumferential direction.

The bead core (102) is enclosed in a bead structure (103), defined along an inner circumferential edge of the tire (100), with which the tire engages on a rim (not represented in Fig. 1) forming part of a vehicle wheel. The space defined by each carcass turn-up (101a) contains a bead filler (104) usually made of a crosslinked elastomeric composition.

An antiabrasive strip (105) is usually placed in an axially external position relative to the carcass turn-up (101 a).

A belt structure (106) is applied along the circumference of the carcass ply (101). In the particular embodiment of Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b), at least one zero-degree reinforcing layer (106c) may optionally be applied, commonly known as a "0° belt", which generally incorporates a plurality of reinforcing cords, typically textile cords, arranged at an angle of a few degrees relative to a circumferential direction, usually coated with a crosslinked elastomeric composition.

A tread band (109), according to the present invention, whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A sidewall (108) is also applied externally onto the carcass ply (101), this sidewall extending, in an axially external position, from the bead (103) to the end of the belt structure (106).

A tread underlayer (111) is placed between the belt structure (106) and the tread band (109).

As represented in Fig. 1, the tread underlayer (111) may have uniform thickness.

Alternatively, the tread underlayer (111) may have a variable thickness in the transversal direction. For example, the thickness may be greater near its outer edges than at a central zone.

In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A strip made of elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101).

The process for producing the tire according to the present invention may be carried out according to techniques and using apparatus that are known in the art, said process including manufacturing a green tire, and subsequently moulding and vulcanizing the green tire.

The tire according to the present invention may be suitable for running at high speeds. In particular, said tire may be a high performance tire commonly referred to as "HP" ("High Performance"), i.e. a tire capable of sustaining a maximum speed of at least 210 Km/h, preferably of from 210 Km/h and 240 Km/h. Examples of said tires are those belonging to the classes "H" and "V".

Although the present invention has been illustrated specifically in relation to a tire, other crosslinked elastomeric manufactured products that may be produced according to the invention may be, for example, conveyor belts, drive belts, or hoses.

The present invention will be further illustrated below by means of a number of preparation examples, which are given for purely indicative purposes and without any limitation of this invention.

### EXAMPLES 1-3

### Preparation of the elastomeric compositions

The elastomeric compositions given in Table 1 were prepared as follows (the amounts of the various components are given in phr).

All the components, except sulfur and sulphenamide accelerator (CBS) were mixed together in an internal mixer (model Pomini PL 1.6) for about 5 min (1^{st} Step). As soon as the temperature reached 145±5°C, the elastomeric composition was discharged. The sulfur and sulphenamide accelerator (CBS), were then added and mixing was carried out in an open roll mixer (2^{nd} Step).

**TABLE 1**

| EXAMPLE | 1 (*) | 2 (*) | 3 |
|---|---|---|---|
| 1^{st} STEP | | | |
| S-SBR | 90 | 90 | 90 |
| BR | 35 | 35 | 35 |
| Silica | 70 | 70 | 70 |
| N375 | - | - | 0.5 |
| X50S^{®} | 11.2 | 11.2 | 10.2 |
| Silquest^{®} A-1891 | - | - | 0.5 |
| Wax | 1.0 | 1.0 | 1.0 |
| Stearic acid | 2.0 | 2.0 | 2.0 |
| Alipahtic oil | 8.0 | 8.0 | 8.0 |
| DPG80 | 2.4 | 2.4 | 2.4 |
| Antioxidant | 2.0 | 2.0 | 2.0 |
| Zinc oxide | 2.5 | - | - |

| 2^{nd} STEP | | | |
|---|---|---|---|
| Sulfur | 1.2 | 1.2 | 1.25 |
| CBS | 2.0 | 2.0 | 2.0 |

| | | | |
|---|---|---|---|
| (*): comparative. S-SBR: solution-prepared styrene/1,3-butadiene copolymer having a styrene content of 25% by weight and an amount of vinyl unsaturations in the butadiene part of 67%; (Europrene^{®} SOL R 76612 - Polimeri Europa); BR: solution prepared high-cis polybutadiene having an amount of vinyl unsaturations of 98% by weight (Neocis^{®} BR 60 - Polimeri Europa); Silica: Zeosil^{®} 1165 MP (Rhodia); N375: carbon black (Cabot); X50S^{®}: silane coupling agent comprising 50% by weight of carbon black and 50% by weight of bis(3-triethoxysilylpropyl)tetrasulphide (Evonik Degussa GmbH); Silquest^{®} A-1891 Silane: 3-mercaptopropyltriethoxysilane (GE Silicones); Aliphatic oil: Catenex^{®} SNR (Shell); DPG80 (accelerator): diphenyl guanidine (Rhenogran^{®} DPG80 - Rhein Chemie); Antioxidant: phenyl-p-phenylenediamine (6-PPD - Akzo Nobel); Sulfur: soluble sulfur; CBS (accelerator): N-cyclohexyl-2-benzothiazyl-sulphenamide (Vulkacit^{®} CZ/C - Lanxess). | | | |

The modulus (100% Modulus and 300% Modulus), the stress at break, as well as the elongation at break, were measured according to Standard ISO 37:2005 on samples of the abovementioned elastomeric compositions vulcanized at 170°C, for 10 min. The results obtained are given in Table 2.

The hardness in IRHD degrees (at 23°C and at 70°C) according to Standard ISO 48:1994 were measured on samples of the abovementioned elastomeric compositions vulcanized at 170°C, for 10 min. The results obtained are given in Table 2.

Table 2 also shows the dynamic mechanical properties, measured using an Instron dynamic device in the traction-compression mode according to the following methods. A test piece of the crosslinked elastomeric composition (vulcanized at 170°C, for 10 min) having a cylindrical form (length = 25 mm; diameter = 12 mm), compression-preloaded up to a 25% longitudinal deformation with respect to the initial length, and kept at the prefixed temperature (10°C, 23°C, and 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

Moreover, Table 2 also shows the Payne effect (ΔG'), measured using a Monsanto R.P.A. 2000 rheometer. For this purpose, cylindrical test specimens with weights in the range of from 4.5 g to 5.5 g were obtained by punching from the crosslinked elastomeric composition (vulcanized at 170°C, for 10 min), and were subjected to the measurement of (G') at 70°C, frequency 10 Hz, deformation 0.4% and 10%. Furthermore, Table 2 also show the DIN abrasion: the data (expressed in mm³) correspond to the amount of elastomeric composition removed by operating under the standard conditions given in Standard DIN 53516.

**TABLE 2**

| EXAMPLE | 1 (*) | 2 (*) | 3 |
|---|---|---|---|
| STATIC MECHANICAL PROPERTIES | | | |
| 100% Modulus (CA1) (MPa) | 3.02 | 2.50 | 2.56 |
| 300% Modulus (CA3) (MPa) | 13.5 | 13.14 | 14.08 |
| CA3/CA1 | 4.4 | 4.81 | 5.50 |
| Stress at break (MPa) | 14.50 | 15.09 | 14.99 |
| Elongation at break (%) | 314.8 | 360.0 | 339.6 |
| IRHD hardness (23°C) | 70.1 | 68.3 | 65.7 |
| IRHD hardness (70°C) | 65.7 | 63.4 | 62.8 |

| DYNAMIC MECHANICAL PROPERTIES (Instron) | | | |
|---|---|---|---|
| E' (10°C) | 10.11 | 10.37 | 8.77 |
| E' (23°C) | 8.42 | 8.66 | 7.39 |
| E' (70°C) | 6.72 | 6.27 | 6.00 |
| ΔE' (10°C - 70°C) | 3.39 | 4.10 | 2.77 |
| Tan delta (10°C) | 0.328 | 0.329 | 0.349 |
| Tan delta (23°C) | 0.226 | 0.234 | 0.243 |
| Tan delta (70°C) | 0.104 | 0.128 | 0.126 |

| DYNAMIC MECHANICAL PROPERTIES (R.P.A. 2000 rheometer) | | | |
|---|---|---|---|
| ΔG' (0.4%-10%) (MPa) | 1.34 | 2.0 | 0.96 |
| DIN abrasion (mm³) | 78.9 | 53.4 | 44.6 |

| | | | |
|---|---|---|---|
| (*): comparative. | | | |

### EXAMPLES 4-6

### Preparation of the elastomeric compositions

The elastomeric compositions given in Table 3 were prepared as follows (the amounts of the various components are given in phr).

All the components, except sulfur and sulphenamide accelerator (CBS), were mixed together in an internal mixer (model Pomini PL 1.6) for about 5 min (1^{st} Step). As soon as the temperature reached 145±5°C, the elastomeric composition was discharged. The sulfur and sulphenamide accelerator (CBS), were then added and mixing was carried out in an open roll mixer (2^{nd} Step).

**TABLE 3**

| EXAMPLE | 4 (*) | 5 (*) | 6 |
|---|---|---|---|
| 1^{st} STEP | | | |
| S-SBR | 90 | 90 | 90 |
| BR | 35 | 35 | 35 |
| Silica | 65 | 65 | 65 |
| N375 | 0.4 | 0.4 | 3 |
| X50S^{®} | 10.4 | 10.4 | 5.2 |
| Silquest^{®} A-1891 | - | - | 1.3 |
| Wax | 1.0 | 1.0 | 1.0 |
| Stearic acid | 2.0 | 2.0 | 2.0 |
| Aliphatic oil | 8.0 | 8.0 | 8.0 |
| DPG80 | 2.4 | 2.4 | 2.4 |
| Antioxidant | 2.0 | 2.0 | 2.0 |
| Zinc oxide | 2.5 | - | - |

| 2^{nd} STEP | | | |
|---|---|---|---|
| Sulfur | 1.29 | 1.29 | 1.73 |
| CBS | 2.0 | 2.0 | 2.0 |

| | | | |
|---|---|---|---|
| (*): comparative. S-SBR: solution-prepared styrene/1,3-butadiene copolymer having a styrene content of 25% by weight and an amount of vinyl unsaturations in the butadiene part of 67%; (Europrene^{®} SOL R 76612 - Polimeri Europa); BR: solution prepared high-cis polybutadiene having an amount of vinyl unsaturations of 98% by weight (Neocis^{®} BR 60 - Polimeri Europa); Silica: Zeosil^{®} 1165 MP (Rhodia); N375: carbon black (Cabot) X50S^{®}: silane coupling agent comprising 50% by weight of carbon black and 50% by weight of bis(3-triethoxysilylpropyl)tetrasulphide (Evonik Degussa GmbH); Silquest^{®} A-1891 Silane: 3-mercaptopropyltriethoxysilane (GE Silicones); Aliphatic oil: Catenex^{®} SNR (Shell); DPG80 (accelerator): diphenyl guanidine (Rhenogran^{®} DPG80 - Rhein Chemie); Antioxidant: phenyl-p-phenylenediamine (6-PPD-Akzo Nobel); Sulfur: soluble sulfur; CBS (accelerator): N-cyclohexyl-2-benzothiazyl-sulphenamide (Vulkacit^{®} CZ/C - Lanxess). | | | |

The modulus (100% Modulus and 300% Modulus), the stress at break, the elongation at break, the hardness in IRHD degrees (at 23°C and at 70°C), the dynamic mechanical properties, the Payne effect, as well as the DIN abrasion, were measured as reported in Examples 1-3. The results obtained are given in Table 4.

**TABLE 4**

| EXAMPLE | 4 (*) | 5 (*) | 6 |
|---|---|---|---|
| STATIC MECHANICAL PROPERTIES | | | |
| 100% Modulus (CA1) (MPa) | 2.43 | 2.64 | 2.71 |
| 300% Modulus (CA3) (MPa) | 11.75 | 12.19 | 13.95 |
| CA3/CA1 | 4.84 | 4.6 | 5.15 |
| Stress at break (MPa) | 12.98 | 13.55 | 14.14 |
| Elongation at break (%) | 351.0 | 347.2 | 328.9 |
| IRHD hardness (23°C) | 68.2 | 68.9 | 66.9 |
| IRHD hardness (70°C) | 65.6 | 65.7 | 64.3 |

| DYNAMIC MECHANICAL PROPERTIES (Instron) | | | |
|---|---|---|---|
| E' (10°C) | 8.49 | 9.67 | 8.62 |
| E' (23°C) | 7.25 | 8.36 | 7.42 |
| E' (70°C) | 5.57 | 6.30 | 5.45 |
| ΔE' (10°C - 70°C) | 2.92 | 3.37 | 3.17 |
| Tan delta (10°C) | 0.330 | 0.305 | 0.330 |
| Tan delta (23°C) | 0.230 | 0.227 | 0.240 |
| Tan delta (70°C) | 0.130 | 0.119 | 0.100 |

| DYNAMIC MECHANICAL PROPERTIES (R.P.A. 2000 rheometer) | | | |
|---|---|---|---|
| ΔG' (0.4%-10%) (MPa) | 1.25 | 1.13 | 0.82 |
| DIN abrasion (mm³) | 75.0 | 58.3 | 46.4 |

| | | | |
|---|---|---|---|
| (*): comparative. | | | |

The results above reported (Tables 2 and 4) clearly show that the addition of a coupling agent containing at least one mercapto group to a crosslinkable composition free of zinc oxide (Examples 3 and 6) allows to obtain crosslinked elastomeric compositions showing good mechanical properties (both static and dynamic) as well as a good balance between their wet grip, rolling resistance and abrasion resistance. In particular, said crosslinked elastomeric compositions show:
- higher tensile modulus at 300% elongation (300% Modulus);
- reduced variation of the dynamic elastic modulus (E') as the temperatures increases (low ΔE');
- good balance between rolling resistance (i.e. Tan delta at 70°C), wet grip (i.e. Tan delta at 10°C), and abrasion resistance;
- reduced Payne effect, i.e improved reinforcing filler dispersion (low ΔG')

## Claims

1. Tire comprising at least one structural element including a crosslinked elastomeric material obtained by crosslinking a crosslinkable elastomeric composition comprising:
(a) 100 phr of at least one elastomeric polymer;
(b) from 5 phr to 120 phr, of at least one silica reinforcing filler;
(c) from 0.1 phr to 10 phr of at least one coupling agent containing at least one mercapto group selected from a compound of formula (I) or a mercaptosilane of formula (II) 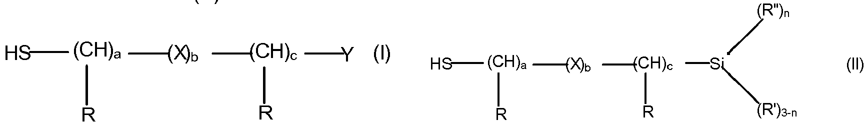 wherein:
- a + c is an integer of from 1 to 36, extremes included;
- R, which may be equal or different from each other, represents a hydrogen atom; a linear or branched C₁-C₆ alkyl group; a -COOH group; an alkylpolyether group having formule -CₚH₂ₚ₊₁(OCₘH₂ₘ)_{z} wherein p is an integer of from 2 to 20 extremes included, m is an integer of from 1 to 20 extremes included, and z is an integer of from 1 to 20 extremes included;
- X represents an oxygen atom; a sulfur atom; a -NH group;
- when X represents an oxygen atom or a -NH group, b is 0 or 1;
- when X represents a sulfur atom, b is 0, or an integer of from 1 to 4, extremes included;
- Y represents a polar group which is selected from: silane groups; acid groups; ester groups; amide groups; imide groups; nitro groups; hydroxy groups; mercapto groups; on condition that, when Y represents a mercapto group, at least one of the R substituents is a -COOH group;
- R" represents a halogen atom such as chlorine, bromine, iodine; or a C₁-C₁₀ alkoxy group;
- R', which may be equal or different from each other, are selected from: C₁-C₃₆ alkyl groups; C₆-C₂₀ aryl groups; C₇-C₃₀ alkylaryl or arylalkyl groups; C₅-C₃₀ cycloaliphatic groups;
- n is an integer of from 1 to 3, extremes included;
(d) 0.5 to 10 phr of at least one silane coupling agent, other than said at least coupling agent containing at least one mercapto group (c), having formula (IV)
(R₅)₃Si-CₒH₂ₒ-R6 (IV)
wherein the groups R₅, which may be equal or different from each other, are selected from: alkyl, alkoxy or aryloxy groups or from halogen atoms, on condition that at least one of the groups R₅ is an alkoxy or aryloxy group; o is an integer of from 1 to 6, extremes included; R₆ is a group selected from: nitroso, amino, epoxide, vinyl, imide, chloro, -(S)_{q}CₒH₂ₒ-Si-(R₅)₃ or -S-COR₅, wherein o and q are integers of from 1 to 6, extremes included and the groups R₅ are defined as above;
said crosslinkable elastomeric composition comprising an amount lower than 0.5 phr of heavy metals or derivatives thereof.

2. Tire according to claim 1, wherein said crosslinkable elastomeric composition is substantially free of zinc or derivatives thereof.

3. Tire according to claim 1 or 2, wherein said crosslinkable elastomeric composition comprises from 20 phr to 100 phr of at least one silica reinforcing filler.

4. Tire according to any one of the preceding claims, wherein said crosslinkable elastomeric composition comprises from 0.2 phr to 8 phr of at least one coupling agent containing at least one mercapto group.

5. Tire according to any one of the preceding claims comprising:
- a carcass structure of a substantially toroidal shape, having opposite lateral edges associated with respective right-hand and left-hand bead structures;
- a belt structure applied in a radially external position with respect to said carcass structure;
- a tread band applied in a radially external position with respect to said belt structure;
- a pair of sidewalls applied laterally on opposite sides with respect to said carcass structure;
wherein said structural element is said tread band.

6. Tire according to any one of the preceding claims, wherein said at least one elastomeric polymer (a) is selected from diene elastomeric polymers (a₁) having a glass transition temperature below 20°C.

7. Tire according to any one of the preceding claims, wherein said at least one silica reinforcing filler (b) is selected from: pyrogenic silica, precipitated amorphous silica, wet silica (hydrated silicic acid), dry silica (anhydrous silicic acid), fumed silica, calcium silicate, or mixtures thereof.

8. Tire according to claim 1 wherein the coupling agent (c) is a mercaptosilane of formula (II).

9. Tire according to claim 8, wherein the mercaptosilanes having general formula (II) are: 1-mercaptomethyltriethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercaptooctadecyldiethoxychlorosilane, 3-(triethoxysilyl)propanthiol reaction product with ethoxylated C₁₃-alcohol, or mixture thereof.

10. Tire according to claim 1 wherein the coupling agent (d) is selected from bis(3-triethoxysilylpropyl)tetrasulphide, bis(3-triethoxysilylpropyl)disulphide, monoethoxy-dimethylsilylpropyltetrasulphide, monoethoxy-dimethylsilylpropyldisulphide, or mixtures thereof.

11. Tire according to claim 10 wherein the coupling agent (d) is present in the crosslinkable elastomeric composition in an amount of from 0.5 phr to 6 phr.

12. Tire according to any of the previous claims further comprising at least one sulfur or a sulfur donor (e).

13. Tire according to any one of the preceding claims, wherein said crosslinkable elastomeric composition comprises at least one layered material (g) having an individual layer thickness of from 0.01 nm to 30 nm.

14. Tire according to claim 13, wherein said at least one layered material (g) is selected from: phyllosilicates such as smectites, such as montmorillonite, bentonite, nontronite, beidellite, volkonskoite, hectorite, saponite, sauconite; vermiculite; halloisite; sericite; aluminate oxides; hydrotalcite; or mixtures thereof.

## Patentansprüche

1. Reifen umfassend zumindest ein strukturelles Element mit einem vernetzten Elastomermaterial, das durch Vernetzen einer vernetzbaren Elastomerzusammensetzung erhalten wird, die Folgendes umfasst:
(a) 100 phr zumindest eines elastomeren Polymers;
(b) von 5 phr bis 120 phr zumindest eines verstärkenden Silikatfüllstoffs;
(c) von 0,1 phr bis 10 phr zumindest eines Haftvermittlers enthaltend zumindest eine Mercapto-Gruppe ausgewählt aus einer Verbindung der Formel (I) oder einem Mercaptosilan der Formel (II) 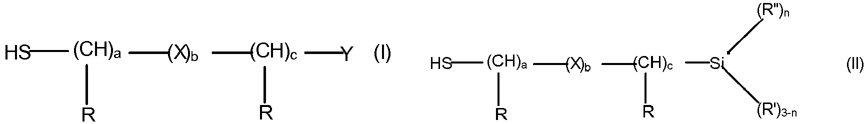 wobei:
- a + c eine ganze Zahl von 1 bis 36 ist (Extremwerte eingeschlossen);
- R, das jeweils gleich oder unterschiedlich sein kann, ein Wasserstoffatom darstellt; eine geradkettige oder verzweigte C₁-C₆-Alkylgruppe; eine -COOH-Gruppe; eine Alkylpolyethergruppe der Formel -CₚH₂ₚ₊₁(OCₘH₂ₘ)_{z} ist, wobei p eine ganze Zahl von 2 bis 20 ist (Extremwerte eingeschlossen), m eine ganze Zahl von 1 bis 20 ist (Extremwerte eingeschlossen), und 2 eine ganze Zahl von 1 bis 20 ist (Extremwerte eingeschlossen);
- X ein Sauerstoffatom; ein Schwefelatom; eine -NH-Gruppe darstellt;
- wenn X ein Sauerstoffatom oder eine -NH-Gruppe ist, b 0 oder 1 ist;
- wenn X ein Schwefelatom darstellt, b 0 oder eine ganze Zahl von 1 bis 4 ist (Extremwerte eingeschlossen);
- Y eine polare Gruppe darstellt, die ausgewählt ist aus: Silangruppen; Säuregruppen; Estergruppen; Amidgruppen; Imidgruppen; Nitrogruppen; Hydroxygruppen; Mercaptogruppen; unter der Maßgabe, dass, wenn Y eine Mercaptogruppe darstellt, zumindest einer der R-Substituenten eine -COOH-Gruppe ist;
- R" ein Halogenatom wie Chlor, Brom, Iod darstellt; oder eine C₁-C₁₀-Alkoxygruppe;
- R', die jeweils gleich oder unterschiedlich sein können, ausgewählt sind aus : C₁-C₃₆-Alkylgruppen; C₆-C₂₀-Arylgruppen; C₇-C₃₀-Alkylaryl- oder Arylalkylgruppen; zykloaliphatischen C₅-C₃₀-Gruppen;
- n eine ganze Zahl von 1 bis 3 ist (Extremwerte eingeschlossen);
(d) 0,5 bis 10 phr zumindest eines Silan-Haftvermittlers, der sich von dem zumindest einen Haftvermittler enthaltend die zumindest eine Mercapto-Gruppe (c) unterscheidet, mit der Formel (IV)
(R₅)₃Si-CₒH₂ₒ-R6 (IV)
wobei die Gruppen R₅, die jeweils gleich oder unterschiedlich sein können, ausgewählt sind aus: Alkyl-, Alkoxy- oder Aryloxy-Gruppen oder aus Halogenatomen, unter der Maßgabe, dass zumindest eine der Gruppen R₅ eine Alkoxy- oder Aryloxygruppe ist; o eine ganze Zahl von 1 bis 6 ist (Extremwerte eingeschlossen); R₆ eine Gruppe ist, die ausgewählt ist aus: Nitroso-, Amino-, Epoxid-, Vinyl-, Imid-, Chlor-, -(S)_{q}CₒH₂ₒ-Si-(R₅)₃ oder -S-COR₅, wobei o und q ganze Zahlen von 1 bis 6 ist (Extremwerte eingeschlossen), und die Gruppen R₅ wie oben definiert sind;
wobei die vernetzbare Elastomerzusammensetzung eine Menge an Schwermetallen oder deren Derivaten von unter 0,5 phr umfassen.

2. Reifen nach Anspruch 1, wobei die vernetzbare Elastomerzusammensetzung im Wesentlichen frei von Zink oder dessen Derivaten ist.

3. Reifen nach Anspruch 1 oder 2, wobei die vernetzbare Elastomerzusammensetzung von 20 phr bis 100 phr zumindest eines verstärkenden Silikatfüllstoffs umfasst.

4. Reifen nach einem der vorhergehenden Ansprüche, wobei die vernetzbare Elastomerzusammensetzung von 0,2 phr bis 8 phr zumindest eines Haftvermittlers enthaltend zumindest eine Mercaptogruppe umfasst.

5. Reifen nach einem der vorhergehenden Ansprüche, der Folgendes umfasst:
- eine Karkassenstruktur einer im Wesentlichen ringförmigen Gestalt mit gegenüberliegenden Seitenkanten, die jeweiligen rechtsseitigen und linksseitigen Wulststrukturen zugeordnet sind,
- eine Gürtelstruktur, die in Bezug auf die Karkassenstruktur in einer radial externen Position angelegt ist;
- einen Laufflächenring, der in Bezug auf die Gürtelstruktur in einer radial externen Position angelegt ist;
- ein Paar Seitenwände, die seitlich auf gegenüberliegenden Seiten in Bezug auf die Karkassenstruktur angebracht sind;
wobei das Strukturelement der Laufflächenring ist.

6. Reifen nach einem der vorhergehenden Ansprüche, wobei das zumindest eine elastomere Polymer (a) ausgewählt ist aus der Gruppe bestehend aus Dien-Elastomerpolymeren (a₁) mit einer Glasübergangstemperatur unter 20 °C.

7. Reifen nach einem der vorhergehenden Ansprüche, wobei der zumindest eine verstärkende Silikatfüllstoff (b) ausgewählt ist aus: pyrogenes Siliciumdioxid, gefälltes amorphes Siliciumdioxid, feuchtes Siliciumdioxid (hydrierte Kieselsäure), trockenes Siliziumdioxid (Kieselsäureanhydrid), pyrogene Kieselsäure, Kalziumsilikat oder Mischungen davon.

8. Reifen nach Anspruch 1, wobei der Haftvermittler (c) ein Mercaptosilan der Formel (II) ist.

9. Reifen nach Anspruch 8, wobei die Mercaptosilane mit der allgemeinen Formel (II) die folgenden sind: 1-Mercaptomethyltriethoxysilan, 2-Mercaptoethyltriethoxysilan, 3-Mercaptopropyltriethoxysilan, 3-Mercaptopropylmethyldiethoxysilan, 2-Mercaptoethyltripropoxysilan, 18-Mercaptooktadecyldiethoxychlorsilan, das Reaktionsprodukt von 3-(Triethoxysilyl)propanthiol mit ethoxyliertem C₁₃-Alkohol, oder Mischungen davon.

10. Reifen nach Anspruch 1, wobei der Haftvermittler (d) ausgewählt ist aus Bis(3- triethoxysilylpropyl)tetrasulfid, Bis(3-triethoxysilylpropyl)disulfid, Monoethoxydimethylsilylpropyltetrasulfid, Monoethoxydimethylsilylpropyldisulfid oder Mischungen davon.

11. Reifen nach Anspruch 10, wobei der Haftvermittler (d) in der vernetzbaren Elastomerzusammensetzung in einer Menge von 0,5 phr bis 6 phr vorhanden ist.

12. Reifen nach einem der vorhergehenden Ansprüche, des Weiteren umfassend zumindest Schwefel und/oder einen Schwefeldonor (e).

13. Reifen nach einem der vorhergehenden Ansprüche, wobei die vernetzbare Elastomerzusammensetzung zumindest ein Schichtmaterial (g) mit einer einzelnen Schichtdicke von 0,01 nm bis 30 nm umfasst.

14. Reifen nach Anspruch 13, wobei das zumindest eine Schichtmaterial (g) ausgewählt ist aus: Phyllosilikate wie Smektite, etwa Montmorillonit, Bentonit, Nontronit, Beidellit, Volkonskoit, Hektorit, Saponit, Sauconit; Vermiculit; Halloysit; Sericit; Aluminiumoxiden; Hydrotalkit; oder Mischungen davon.

## Revendications

1. Pneu comprenant au moins un élément de structure comportant un matériau élastomère réticulé obtenu par réticulation d'une composition élastomère réticulable comprenant :
(a) 100 phr d'au moins un polymère élastomère ;
(b) 5 phr à 120 phr, d'au moins une charge de renfort en silice ;
(c) 0,11 phr à 10 phr d'au moins un agent de couplage contenant au moins un groupe mercapto choisi parmi un composé de formule (I) ou un mercaptosilane de formule (II) 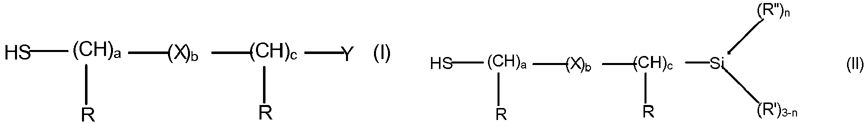 où :
- a + c est un nombre entier compris entre 1 et 36, bornes incluses ;
- R, qui peuvent être identiques ou différents les uns des autres, représentent un atome d'hydrogène ; un groupe alkyle en C₁ à C₆ linéaire ou ramifié ; un groupe -COOH ; un groupe alkylpolyéther ayant la formule -CₚH₂ₚ₊₁(OCₘH₂ₘ)_{z} où p est un nombre entier compris entre 2 et 20, bornes incluses, m est un nombre entier compris entre 1 et 20, bornes incluses, et z est un nombre entier compris entre 1 et 20, bornes incluses ;
- X représente un atome d'oxygène ; un atome de soufre ; un groupe -NH ;
- lorsque X représente un atome d'oxygène ou un groupe -NH, b vaut 0 ou 1 ;
- lorsque X représente un atome de soufre, b vaut 0 ou un nombre entier compris entre 1 et 4, bornes incluses ;
- Y représente un groupe polaire qui est choisi parmi : des groupes silane ; des groupes acide ; des groupes ester ; des groupes amide ; des groupes imide ; des groupes nitro ; des groupes hydroxy ; des groupes mercapto ; à condition que, lorsque Y représente un groupe mercapto, au moins l'un des substituants R soit un groupe - COOH ;
- R" représente un atome d'halogène tel que le chlore, le brome, l'iode ; ou un groupe alcoxy en C₁ à C₁₀ ;
- R', qui peuvent être identiques ou différents les uns des autres, sont choisis parmi : des groupes alkyle en C₁ à C₃₆ ; des groupes aryle en C₆ à C₂₀ ; des groupes arylalkyle ou alkylaryle en C₇ à C₃₀; des groupes cycloaliphatiques en C₅ à C₃₀ ;
- n est un nombre entier compris entre 1 et 3, bornes incluses ;
(d) 0,5 à 10 phr d'au moins un agent de couplage au silane, autre que ledit au moins un agent de couplage contenant au moins un groupe mercapto (c), ayant la formule (IV)
(R₅)₃Si-CₒH₂ₒ-R₆ (IV)
où les groupes R₅, qui peuvent être identiques ou différents les uns des autres, sont choisis parmi : des groupes alkyle, alcoxy ou aryloxy ou parmi des atomes d'halogène, à condition qu'au moins l'un des groupes R₅ soit un groupe alcoxy ou aryloxy ; o est un nombre entier compris entre 1 et 6, bornes incluses ; R₆ est un groupe choisi parmi : des groupes nitroso, amino, époxyde, vinyle, imide, chloro, -(S)_{q}CₒH₂ₒ-Si-(R₅)₃ ou -S-COR₅, où o et q sont des nombres entiers compris entre 1 à 6, bornes incluses, et les groupes R₅ sont tels que définis ci-dessus ;
ladite composition élastomère réticulable comprenant une quantité inférieure à 0,5 phr de métaux lourds ou de dérivés de ceux-ci.

2. Pneu selon la revendication 1, dans lequel ladite composition élastomère réticulable est essentiellement exempte de zinc ou de dérivés de celui-ci.

3. Pneu selon la revendication 1 ou 2, dans lequel ladite composition élastomère réticulable comprend 20 phr à 100 phr d'au moins une charge de renfort en silice.

4. Pneu selon l'une quelconque des revendications précédentes, dans lequel ladite composition élastomère réticulable comprend 0,2 phr à 8 phr d'au moins un agent de couplage contenant au moins un groupe mercapto.

5. Pneu selon l'une quelconque des revendications précédentes comprenant :
- une structure de carcasse de forme essentiellement toroïdale, ayant des bords latéraux opposés associés à des structures de talon droite et gauche respectives ;
- une structure de ceinture appliquée dans une position radialement extérieure par rapport à ladite structure de carcasse ;
- une bande de roulement appliquée dans une position radialement extérieure par rapport à ladite structure de ceinture ;
- une paire de parois latérales appliquées latéralement sur des côtés opposés par rapport à ladite structure de carcasse ;
dans lequel ledit élément de structure est ladite bande de roulement.

6. Pneu selon l'une quelconque des revendications précédentes, dans lequel ledit au moins un polymère élastomère (a) est choisi parmi des polymères élastomères diéniques (a₁) ayant une température de transition vitreuse inférieure à 20°C.

7. Pneu selon l'une quelconque des revendications précédentes, dans lequel ladite au moins une charge de renfort en silice (b) est choisie parmi : la silice pyrogène, la silice amorphe précipitée, la silice humide (acide silicique hydraté), la silice sèche (acide silicique anhydre), la silice pyrogénée, le silicate de calcium ou des mélanges de ceux-ci.

8. Pneu selon la revendication 1, dans lequel l'agent de couplage (c) est un mercaptosilane de formule (II).

9. Pneu selon la revendication 8, dans lequel les mercaptosilanes ayant la formule générale (II) sont : le 1-mercaptométhyltriéthoxysilane, le 2-mercaptoéthyltriéthoxysilane, le 3-mercaptopropyltriéthoxysilane, 3-mercaptopropylméthyldiéthoxysilane, le 2-mercaptoéthyltripropoxysilane, le 18-mercaptooctadécyldiéthoxychlorosilane, un produit de récation du 3-(triéthoxysilyl)propanthiol avec un alcool en C₁₃ éthoxylé ou un mélange de ceux-ci.

10. Pneu selon la revendication 1, dans lequel l'agent de couplage (d) est choisi parmi le tétrasulfure de bis(3-triéthoxysilylpropyle), le disulfure de bis(3-triéthoxysilylpropyle), le tétrasulfure de monoéthoxy-diméthylsilylpropyle, le disulfure monoéthoxy-diméthylsilylpropyle, ou des mélanges de ceux-ci.

11. Pneu selon la revendication 10, dans lequel l'agent de couplage (d) est présent dans la composition élastomère réticulable en une quantité allant de 0,5 phr à 6 phr.

12. Pneu selon l'une des revendications précédentes, comprenant en outre au moins un atome de soufre ou un donneur de soufre (e).

13. Pneu selon l'une quelconque des revendications précédentes, dans lequel ladite composition élastomère réticulable comprend au moins un matériau stratifié (g) ayant une épaisseur de couche individuelle de 0,01 nm à 30 nm.

14. Pneu selon la revendication 13, dans lequel ledit au moins un matériau stratifié (g) est choisi parmi : des phyllosilicates tels que des smectites, telles que la montmorillonite, la bentonite, la nontronite, la beidellite, la volkonskoïte, l'hectorite, la saponite, la sauconite ; la vermiculite ; l'halloysite ; la séricite ; des oxydes aluminates ; l'hydrotalcite ; ou des mélanges de ceux-ci.
